# EUROPÄISCHE PATENTSCHRIFT

(11) **EP 3 342 635 B1**
(45) Veröffentlichungstag und Bekanntmachung des Hinweises auf die Patenterteilung: **27.02.2019**
(21) Anmeldenummer: 17205671.5
(22) Anmeldetag: 06.12.2017
(51) Int. Cl.: B60N 3/10, B60R 7/04

(54) **ABLAGEEINRICHTUNG**
STACKING DEVICE
DISPOSITIF DE RÉCEPTION

(30) Priorität: 27.12.2016 DE 102016125723
(43) Veröffentlichungstag der Anmeldung: 04.07.2018
(73) Patentinhaber: Dr. Schneider Kunststoffwerke GmbH, 96317 Kronach-Neuses (DE)
(72) Erfinder: Uhlenbusch, Olaf, 96275 Marktzeuln (DE); Schneider, Michael, 96264 Altenkunstadt (DE)

(56) Entgegenhaltungen:
- DE-A1-102005 037 188
- DE-A1-102007 006 575

## Beschreibung

Es wird eine Ablageeinrichtung mit einem Aufnahmefach für Gegenstände und mit Mitteln zum Unterteilen des Aufnahmefachs beschrieben, wobei über die Mittel zum Unterteilen des Aufnahmefachs das Aufnahmefach in verschieden große Teilfächer unterteilt werden kann.

Aus dem Stand der Technik sind insbesondere für Kraftfahrzeuge Ablageeinrichtungen mit einem Aufnahmefach bekannt, das über verschiedene Einrichtungen in unterschiedlich große Teilfächer unterteilt werden kann. Die bekannten Einrichtungen umfassen Einsätze mit verschiedenen Größen und Formen oder an einer Aufnahmefachwand angeordnete und verschwenkbar gelagerte Zwischenwände. Darüber hinaus sind flexible Wände bekannt, welche gespannt und an verschiedenen Positionen einer Fachwand angebracht werden können.

DE 10 2005 037 188 A1 offenbart beispielsweise ein Trennelement, das verschiebbar und in einer Richtung verschwenkbar an einem Ablagefach angeordnet ist. Ferner offenbart DE 10 2008 049 759 A1 eine Haltevorrichtung mit einer Aufnahme und einer verschwenkbaren Trennwand.

Über ein an einer Fachwand angeordnetes verschwenkbares Trennelement beziehungsweise eine verschwenkbar gelagerte Trennwand können zwar verschieden große Teilfächer gebildet werden, jedoch sind die Teilfächer durch die verschwenkbare Anordnung an der Fachwand auf bestimmte Größen begrenzt. Weiterhin ist es nur möglich, die Teilfächer in ihrer Größe zu verändern, wodurch die sichere Aufbewahrung verschiedener Gegenstände begrenzt ist. Dies bedeutet, dass nicht alle üblichen Gegenstände sicher gehalten werden können. Insbesondere eine sichere Verstauung von Smartphones und dergleichen ist mit den aus dem Stand der Technik bekannten Ablageeinrichtungen nicht möglich. Bekannte Haltevorrichtungen für Smartphones sind dabei nur auf solche ausgelegt und können keine anderen Gegenstände aufnehmen oder sicher halten.

Demgegenüber besteht die Aufgabe darin, eine Ablageeinrichtung mit einem Aufnahmefach für eine Vielzahl von Gegenständen und mit Mitteln zum Unterteilen des Aufnahmefachs anzugeben, wobei verschieden große Teilfächer gebildet werden können und eine sichere Position eines Fachteilers bereitgestellt wird. Ferner soll eine alternative Lösung zu den aus dem Stand der Technik bekannten Einrichtungen aufgezeigt werden.

Die Aufgabe wird durch eine Ablageeinrichtung mit den in Anspruch 1 angegebenen technischen Merkmalen gelöst. Vorteilhafte Weiterbildungen sind in den Unteransprüchen im Detail angegeben.

Die vorstehend genannte Aufgabe wird durch eine Ablageeinrichtung mit einem Aufnahmefach für Gegenstände und mit Mitteln zum Unterteilen des Aufnahmefachs in Teilfächer gelöst, aufweisend mindestens einen Fachteiler, wobei
- der Fachteiler entlang einer ersten Richtung verlagerbar am Aufnahmefach angeordnet ist,
- der Fachteiler um eine in der ersten Richtung verlaufende erste Achse verschwenkbar ist, und
- der Fachteiler um eine orthogonal zur ersten Achse verlaufende zweite Achse verschwenkbar ist.

Der mindestens eine Fachteiler kann einerseits entlang einer ersten Richtung verlagert werden und andererseits in zwei Richtungen verschwenkt werden. Es ist daher möglich, den Fachteiler für eine Vielzahl von Gegenständen in eine entsprechende Position zu verbringen.

Gegenüber bekannten Fachteilern aus dem Stand der Technik kann der Fachteiler um eine erste Achse verschwenkt werden, entlang welcher der Fachteiler auch verlagerbar ist. Der Fachteiler kann daher geneigt werden, was eine sichere Lagerung von verschiedenen Gegenständen ermöglicht. Darüber hinaus kann auch die Ausrichtung von aufgenommenen Gegenständen verändert und an verschiedene Gegenstände angepasst werden.

Die Ablageeinrichtung kann mehrere Fachteiler aufweisen, die entsprechend verlagert werden können. Es können bspw. an einer Seitenwand mindestens zwei Fachteiler verlagerbar angeordnet sein. Die Fachteiler können auch jeweils entlang verschiedener Seitenwände verlagert werden. Weist eine Ablageeinrichtung nur einen Fachteiler auf, so ist der Fachteiler vorzugsweise entlang einer Seitenwand verlagerbar, welche gegenüber den anderen Seitenwänden die größte Länge aufweist, damit eine möglichst vielfältige Unterteilung des Aufnahmefachs erreicht werden kann.

Der Fachteiler kann eine Arretierungseinrichtung aufweisen, über welche die Position des Fachteilers in der ersten Richtung und die Auslenkung des Fachteilers um die erste Achse und um die zweite Achse arretierbar sind. Die Arretierung verhindert, dass der mindestens eine Fachteiler ungewollt in eine Ausgangsstellung oder eine andere Stellung übergeht. Vorteilhaft kann über eine Betätigung der Arretierungseinrichtung eine Freigabe des Fachteilers zum Verstellen in allen Richtungen erfolgen oder die Arretierungseinrichtung ist so ausgebildet, dass bspw. die Verlagerung des Fachteilers in der ersten Richtung durch eine erste Betätigung und das Verschwenken des Fachteilers um die erste Achse und die zweite Achse durch eine zweite Betätigung erreicht wird. Die erste und die zweite Betätigung können dann unabhängig voneinander durchgeführt werden.

In weiteren Ausführungsformen kann die Arretierungseinrichtung so ausgebildet sein, dass auch das Verschwenken des Fachteilers um die erste Achse und um die zweite Achse durch verschiedene Betätigungen erreicht wird. Dabei kann bspw. ein Arretierungselement zum Freigeben des Verschwenkens um die erste Achse um ein erstes Maß verlagert werden. Zum Freigeben des Verschwenkens um die zweite Achse kann das Arretierungselement um ein zweites Maß verlagert werden, wobei zuerst die Verlagerung um das erste Maß erfolgen muss.

Die Arretierungseinrichtung kann eine Verlagerungseinheit aufweisen, die entlang einer Führung verschiebbar gelagert ist und eine Feder aufweist, welche die Verlagerungseinheit in eine Raststellung drückt. Um den Fachteiler entlang der Führung zu verlagern muss die Verlagerungseinheit, bspw. über ein Trennelement, aus einer Raststellung gedrückt werden. Die Feder stellt sicher, dass sich die Verlagerungseinheit ohne äußere Krafteinwirkung in einer arretierten Stellung befindet. Bei dieser Ausführung ist die Arretierungseinrichtung so ausgebildet, dass ein Freigeben der Verlagerung in der ersten Richtung und ein Verschwenken des Fachteilers um die erste Achse und um die zweite Achse getrennt voneinander erfolgen.

Die Führung kann Rastelemente und die Verlagerungseinheit kann korrespondierende Rastelemente aufweisen. Über die Feder wird die Verlagerungseinheit so gegen die Führung gedrückt, dass die Rastelemente der Verlagerungseinheit zwischen korrespondierenden Rastelementen der Führung aufgenommen sind. Eine Verlagerung der Verlagerungseinheit und damit des Fachteilers ist dann nicht möglich. Wird die Verlagerungseinheit bspw. durch einen Druck auf den Fachteiler in Richtung der Feder gedrückt, d.h. die Feder wird zusammengedrückt, werden die Rastelemente der Verlagerungseinheit von den Rastelementen der Führung wegbewegt und der Fachteiler kann über die Verlagerungseinheit bspw. verfahren werden. Die Verlagerung bzw. das Verfahren des Fachteilers kann nur dann erfolgen, wenn die Feder komprimiert wird. D.h. zur Verlagerung des Fachteilers muss die Arretierungseinrichtung betätigt werden und solange betätigt bleiben, bis die Verlagerung abgeschlossen ist.

Die Führung kann bspw. mindestens eine Reihe von Zähnen, analog zur Ausbildung einer Zahnstange, aufweisen. Die Verlagerungseinheit kann bspw. nur einen Zahn, vorzugsweise aber mindestens zwei Zähne, aufweisen, die in einer verriegelten Stellung zwischen benachbarten Zähnen der Führung aufgenommen sind.

An der Verlagerungseinheit kann ein Gelenkelement angeordnet sein und das Gelenkelement kann eine in Richtung der zweiten Achse verlaufende Öffnung aufweisen, in der ein Taster verlagerbar aufgenommen ist. Der Taster ist Teil der Arretierungseinrichtung und zum Freigeben des Verschwenkens um die erste Achse und die zweite Achse vorgesehen. Wird der Taster bspw. gedrückt und innerhalb der Öffnung des Gelenkelements nach unten bewegt, erfolgt ein Freigeben des Verschwenkens um die erste Achse und um die zweite Achse.

Das Gelenkelement kann um die erste Achse verschwenkbar an der Verlagerungseinheit angeordnet sein. Das Verschwenken des Fachteilers um die erste Achse erfolgt in diesen Ausführungen über die Verbindung zwischen Gelenkelement und Verlagerungseinheit. Bspw. weist die Verlagerungseinheit an einer Wand mindestens einen abstehenden Arm auf, der vorzugsweise als Lager für das Gelenkelement ausgebildet ist. Das Lager kann z.B. rund ausgebildet sein. Eine Lageraufnahme an dem Gelenkelement ist dem Lager entsprechend ausgebildet, so dass das Gelenkelement um das Lager verschwenkbar ist. Eine Arretierung der Position des Gelenkelements kann über den Taster erfolgen, der in der Öffnung des Gelenkelements aufgenommen ist.

Der Taster kann über eine Feder vorgespannt sein. Ein Entriegeln der Stellung des Fachteilers zum Verschwenken um die erste Achse und um die zweite Achse erfolgt über den Taster, der in der Öffnung des Gelenkelements aufgenommen ist. Über die Feder wird der Taster in eine verriegelte Stellung gedrückt, so dass bei einem nicht betätigten Taster die Stellung des Fachteilers in Bezug auf ein Verschwenken um die erste Achse und um die zweite Achse verriegelt ist. Ein Verschwenken um die erste Achse und um die zweite Achse kann nur dann erfolgen, solange der Taster gegen die Kraft der Feder in das Gelenkelement mindestens abschnittsweise hineingedrückt wird.

Der Taster kann mindestens ein erstes Rastelement und ein zweites Rastelement aufweisen, die entlang der Längsachse des Tasters beabstandet zueinander angeordnet sind. Über das mindestens eine erste Rastelement und das mindestens eine zweite Rastelement wird die Position des Fachteilers beim Verschwenken um die erste Achse und die zweite Achse festgelegt.

An dem Gelenkelement kann ein um die zweite Achse drehbares Trennelement angeordnet sein und das Trennelement kann eine Öffnung aufweisen, in welcher ein Abschnitt des Tasters aufgenommen ist. Das Trennelement ist das Teil des Fachteilers, welches bspw. in das Aufnahmefach hineinragt und zum Halten von Gegenständen dient. Das Trennelement kann über die Verlagerungseinheit verlagert werden und über die Kopplung des Gelenkelements mit der Verlagerungseinheit sowohl um die erste Achse als auch um die zweite Achse verschwenkt werden.

Das Trennelement kann um die Öffnung herum angeordnete Rastelemente aufweisen und in einer arretierten Stellung des Trennelements kann das mindestens eine zweite Rastelement des Tasters zwischen zwei benachbarten Rastelementen des Trennelements aufgenommen sein. Die Rastelemente des Trennelements können bspw. Zähne sein, welche die Öffnung vollständig umgeben. Wird der Taster nach unten gedrückt, wird das zweite Rastelement zwischen zwei benachbarten Rastelementen des Trennelements herausgeführt und wird nicht mehr zwischen den benachbarten Rastelementen gehalten. Solange das mindestens eine zweite Rastelement nicht mehr zwischen den benachbarten Rastelementen des Trennelements gehalten wird, kann das Trennelement um die zweite Achse verschwenkt werden.

Die Verlagerungseinheit kann mindestens eine Lageröffnung mit innenliegenden Rastelementen aufweisen und in einer arretierten Stellung des Gelenkelements kann das mindestens eine erste Rastelement des Tasters zwischen zwei benachbarten Rastelementen in der Lageröffnung der Verlagerungseinheit aufgenommen sein. Die Lageröffnung befindet sich bspw. in einem Lager, das über einen Arm mit einer Seite bzw. Wand der Verlagerungseinheit verbunden ist. Um das Lager ist das Gelenkelement um die erste Achse verschwenkbar und in dem Lager befindet sich die Lageröffnung mit den innenliegenden Rastelementen. Wird der Taster nach unten gedrückt, wird das mindestens eine erste Rastelement aus einer Stellung zwischen zwei benachbarten, innenliegenden Rastelementen herausgeführt und das Gelenkelement kann relativ zu der Verlagerungseinheit verschwenkt werden. Das Verschwenken kann solange durchgeführt werden, solange der Taster betätigt wird und das mindestens eine erste Rastelement nicht zwischen zwei benachbarten, innenliegenden Rastelementen in der Lageröffnung angeordnet ist.

Bei der Ablageeinrichtung kann ein Verschwenken um die erste Achse und um die zweite Achse über einen Taster freigegeben werden.

Das Trennelement weist in weiteren Ausführungen einen abstehenden, in den Aufnahmeraum ragenden Abschnitt bzw. Arm auf. Dieser Arm kann eine Aufnahmeöffnung aufweisen, die sich mittig und entlang der Längsachse des Arms erstreckt. In diese Aufnahmeöffnung kann bspw. ein Smartphone eingesetzt werden. Das Smartphone wird dabei nicht in erster Linie über die Position bzw. Stellung des Fachteilers gehalten, sondern über dessen besondere Ausbildung. Die Aufnahmeöffnung kann zusätzlich flexible und/oder elastische Elemente aufweisen, die das Smartphone sicher halten und vor Beschädigungen (z.B. Kratzer) schützen. Aufgrund der vielseitigen Verstellbarkeit des Fachteilers kann weiter auch die Ausrichtung des Smartphones innerhalb des Aufnahmeraums beliebig erfolgen.

Eine derartige Ablageeinrichtung kann beispielsweise in einem Fahrzeug, wie einem PKW, einem LKW, einem Reisebus oder in Zügen, Schiffen und Flugzeugen vorgesehen sein. Bei Kraftfahrzeugen kann die Ablageeinrichtung beispielsweise in einer Mittelkonsole oder in einer Armlehne, bspw. einer Rücksitzbank, vorgesehen sein.

Die Gestaltung der Wände und des Bodens der Ablageeinrichtung kann verschiedenartig sein. Beispielsweise können spezielle Oberflächenbeschichtungen vorgesehen sein. Darüber hinaus können die wesentlichen Bestandteile der Ablageeinrichtung aus einem Kunststoff bestehen und sind daher in hoher Stückzahl schnell und kostengünstig herzustellen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung einer Ablageeinrichtung mit einem verlagerbaren Fachteiler;
- Fig. 2: eine perspektivische Darstellung einer Führung der Ablageeinrichtung von Fig. 1 in einer Rückansicht;
- Fig. 3: eine perspektivische Darstellung einer Verlagerungseinheit des Fachteilers;
- Fig. 4: eine perspektivische Darstellung eines Gleitelements der Verlagerungseinheit;
- Fig. 5: eine schematische Seitenansicht der Verlagerungseinheit;
- Fig. 6: eine perspektivische Darstellung eines Gelenkelements des Fachteilers;
- Fig. 7: eine schematische Schnittansicht des Gelenkelements;
- Fig. 8: eine perspektivische Darstellung eines Tasters des Fachteilers;
- Fig. 9: eine schematische Ansicht auf ein Trennelement des Fachteilers von unten;
- Fig. 10: eine schematische Schnittansicht des Trennelements des Fachteilers;
- Fig. 11: eine perspektivische Darstellung des Trennelements und des eingesetzten Tasters von unten;
- Fig. 12: eine perspektivische Darstellung der Verlagerungseinheit und des Tasters;
- Fig. 13: eine schematische Schnittansicht der Führung, der Verlagerungseinheit, des Gelenkelements, des Tasters und des Trennelements; und
- Fig. 14: eine perspektivische, teilweise geschnittene Ansicht der Führung, der Verlagerungseinheit, des Gelenkelements, des Tasters und des Trennelements.

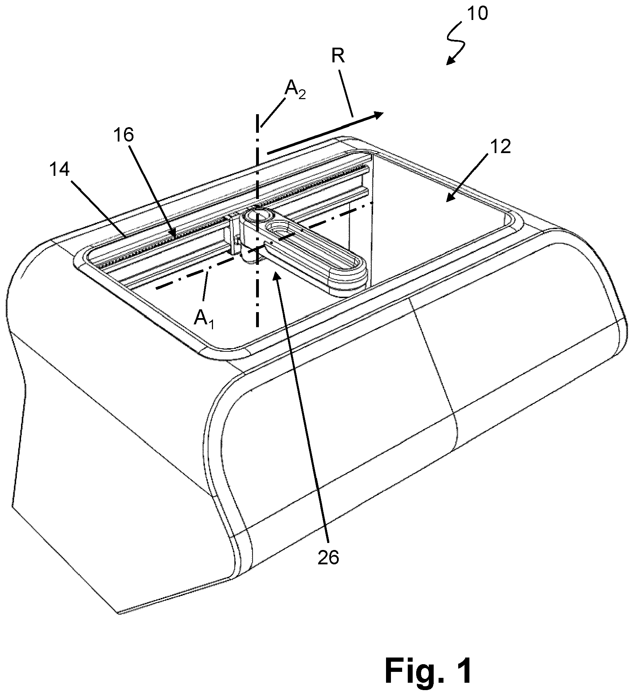

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind. Die Fig. 1 bis 14 zeigen dabei eine beispielhafte Ausführungsform einer Ablageeinrichtung 10. Die gezeigte Ausführung soll jedoch nicht dazu dienen, die hierin beschriebene technische Lehre auf die gezeigten Ausgestaltungen zu beschränken.

Fig. 1 zeigt eine perspektivische Darstellung einer Ablageeinrichtung 10 mit einem verlagerbaren Fachteiler 26. Die Ablageeinrichtung 10 ist an einer Mittelkonsole eines Kraftfahrzeugs angeordnet und ermöglicht es verschiedene Gegenstände sicher zu halten. Um ein Aufnahmefach 12 der Ablageeinrichtung 10 entsprechend der Größe von eingesetzten Gegenständen in Teilfächer zu unterteilen weist die Ablageeinrichtung 10 einen Fachteiler 26 auf, der durch Betätigung einer Arretierungseinrichtung in einer ersten Richtung R verlagert und um eine erste Achse A₁ und um eine zweite Achse A₂ verschwenkt werden kann.

Das Aufnahmefach 12 weist einen Boden und umgebende Seitenwände auf. An einer Seitenwand 14 ist eine Führung 16 angeordnet. Die Führung 16 weist im Wesentlichen die gleiche Länge auf, wie die Seitenwand 16. Um eine möglichst vielfältige und exakte Unterteilung des Aufnahmefachs 12 erreichen zu können, ist die Führung 16 an der Seitenwand 14 angeordnet, welche gegenüber den anderen Seitenwänden die größte Länge aufweist. Der Fachteiler 26 kann entlang der Führung 16 aus der in Fig. 1 gezeigten Position sowohl nach links als auch nach rechts in der ersten Richtung R verlagert werden.

In weiteren nicht dargestellten Ausführungsformen kann die Ablageeinrichtung 10 auch mehrere Fachteiler 26 aufweisen. Diese können an der Führung 16 und/oder an weiteren Führungen an mindestens einer weiteren Seitenwand angeordnet sein. Das Aufnahmefach kann in weiteren Ausführungen auch andere Querschnitte aufweisen.

An einer den Aufnahmeraum 12 umgebenden Oberfläche einer Blende oder der Mittelkonsole können auch Funktionstasten angeordnet sein. Die Funktionstasten können bspw. zur Steuerung von Temperiereinrichtungen, Lichtmodulen oder Energie- und/oder Datenschnittstellen vorgesehen sein und ein Kühlen/Wärmen von in dem Aufnahmeraum 12 aufgenommenen Getränken, eine Beleuchtung der Ablageeinrichtung 10 und/oder eine Kommunikation von in dem Aufnahmeraum 12 aufgenommenen elektronischen Geräten sowie deren Energieversorgung bereitstellen.

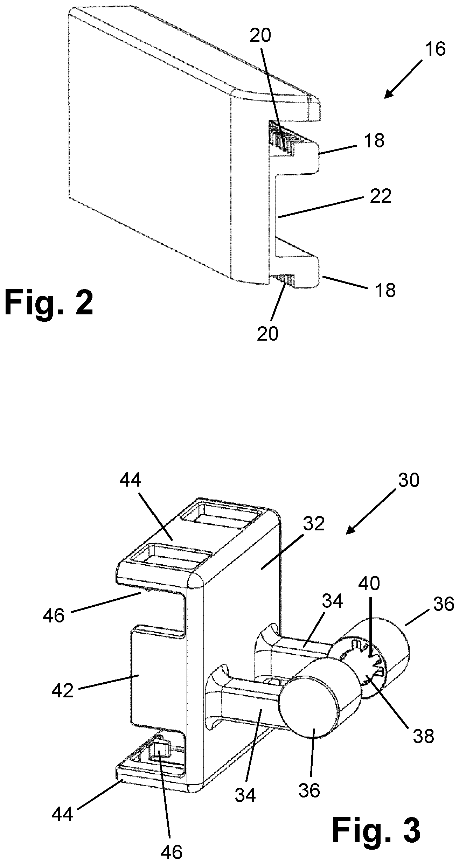

Fig. 2 zeigt eine perspektivische Darstellung der Führung 16 der Ablageeinrichtung 10 von Fig. 1 in einer Rückansicht. Die Führung 16 weist zwei Leisten 18 auf. Zwischen den Leisten 18 weist die Führung 16 einen mittleren Führungsabschnitt 22 auf, an dem eine Verlagerungseinheit 30, insbesondere ein Gleitelement 47 der Verlagerungseinheit 30, verschiebbar ist. Die Leisten 18 weisen Rastelemente 20 auf. Die Rastelemente 20 sind Zähne und analog zu einer Zahnstange ausgebildet. Über die Rastelemente 20 wird eine Arretierung des Fachteilers 26 bezüglich einer Verlagerung in der ersten Richtung R erreicht.

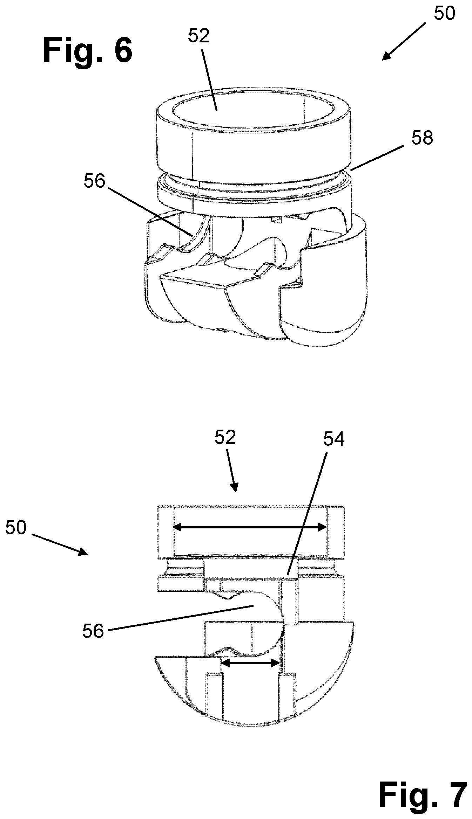

Fig. 3 zeigt eine perspektivische Darstellung der Verlagerungseinheit 30 des Fachteilers 26 ohne das Gleitelement 47. Die Verlagerungseinheit 30 weist eine vordere Wand 32 auf. An der Wand 32 sind eine obere Wand 44 und eine untere Wand 44 sowie Seitenwände 42 angeordnet (in Fig. 3 ist nur eine Seitenwand 42 dargestellt). An der Wand 32 sind zusätzlich zwei Arme 34 angeordnet. Die Arme 34 weisen an ihrem vorderen Ende Lager 36 auf. Die Lager 36 sind rund ausgebildet und in Lageraufnahmen 56 eines Gelenkelements 50 (siehe Fig. 6, 7, 13 und 14) aufgenommen.

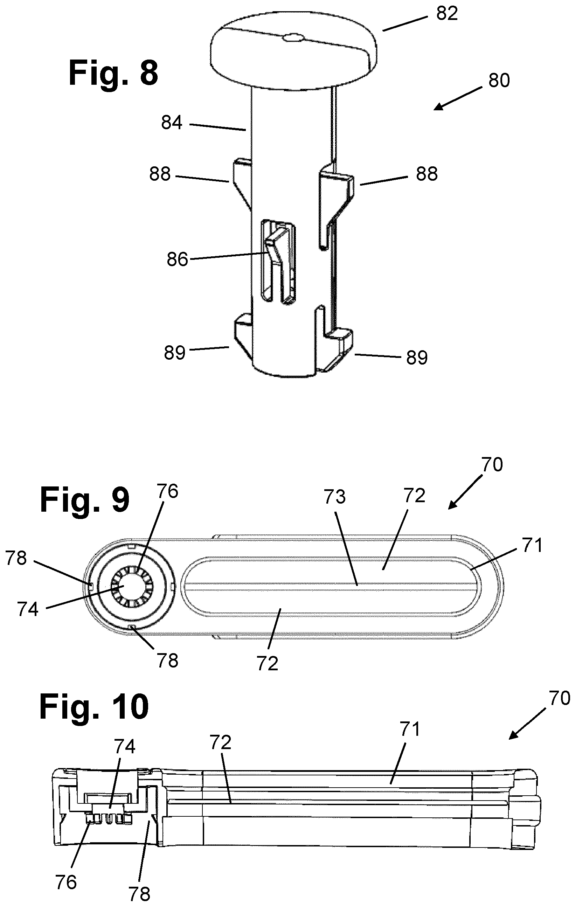

Die Lager 36 weisen an den gegenüberliegenden Seiten Lageröffnungen 38 auf. In den Lageröffnungen 38 sind Rastelemente 40 angeordnet. Die Rastelemente 40 erstrecken sich abschnittsweise um die Lageröffnungen 38. Bei der in den Figuren gezeigten Ausführungsform erstrecken sich die Rastelemente 40 im Wesentlichen um ein Viertel der Lageröffnung 38. Zwischen den Rastelementen 40 wird ein erstes Rastelement 86 eines Tasters 80 (siehe bspw. Fig. 8) im arretierten Zustand aufgenommen.

An den einander zugewandten Seiten der Wände 44 sind Rastelemente 46 angeordnet. In einer arretierten Stellung der Verlagerungseinheit 30 in Bezug auf eine Verlagerung in der ersten Richtung R sind die Rastelemente 46 zwischen zwei benachbarten Rastelementen 20 der Führung 16 aufgenommen.

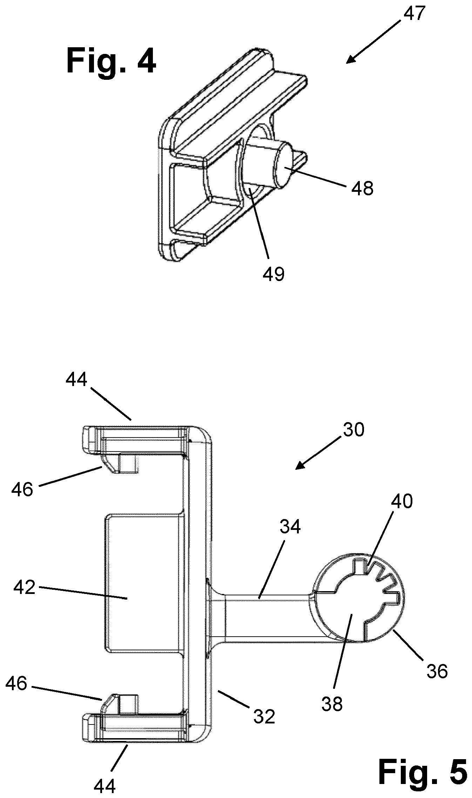

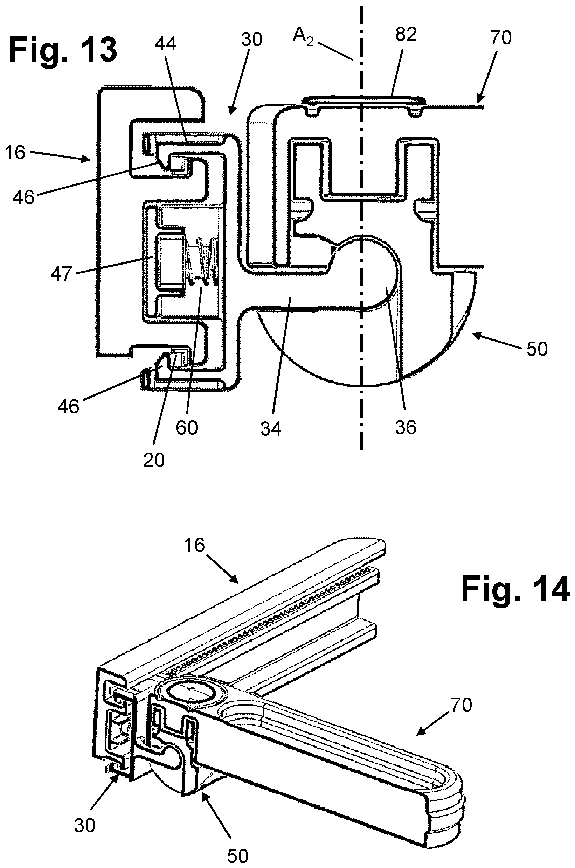

Fig. 4 zeigt eine perspektivische Darstellung des Gleitelements 47 der Verlagerungseinheit 30. Das Gleitelement 47 weist einen Stift 48 auf. Der Stift 48 ist von einer umlaufenden Wand umgeben. In der so gebildeten Öffnung 49 ist eine in Fig. 4 nicht dargestellte Feder 60 (siehe Fig. 13) aufgenommen. Die Feder 60 drückt das Gleitelement 47 von der Verlagerungseinheit 30 weg bzw. drückt die Feder 60 die Verlagerungseinheit 30 von dem zwischen den Leisten 18 in dem mittleren Führungsabschnitt 22 aufgenommene Gleitelement 47 weg. Da die Rastelemente 46 die Zahnstangenabschnitte der Leisten 18 mit den Rastelementen 20 hintergreifen, ist die Verlagerung der Verlagerungseinheit 30 von dem Gleitelement 47 begrenzt. Die Verlagerungseinheit 30 kann nur soweit von dem Gleitelement 47 über die Feder 60 weggedrückt werden, bis die Rastelemente 46 vollständig zwischen zwei benachbarten Rastelementen 20 aufgenommen sind. In einem solchen Zustand ist die Verlagerungseinheit 30 und damit der Fachteiler 26 in Bezug auf eine Verlagerung in der ersten Richtung R verriegelt bzw. arretiert.

Um den Fachteiler 26 zu entriegeln und in der ersten Richtung R verlagern zu können, muss die Verlagerungseinheit 30 gegen die Kraft der Feder 60 zu dem Gleitelement 47 gedrückt werden. Hierzu ist der Abstand zwischen der Rückseite der Wand 32 und der Vorderseite der Leisten 18 im arretierten Zustand so groß, dass die Verlagerungseinheit 30 soweit gegen das Gleitelement 47 gedrückt werden kann, bis die Rastelemente 46 nicht mehr zwischen den Rastelementen 20 aufgenommen sind. Wenn die Rastelemente 46 nicht mehr zwischen den Rastelementen 20 aufgenommen sind, kann die Verlagerungseinheit 30 und damit der Fachteiler 26 in der ersten Richtung R verlagert werden.

Eine Verlagerung in der ersten Richtung R ist nur solange möglich, wie die Verlagerungseinheit 30 gegen das Gleitelement 47 gedrückt wird. Wird kein Druck mehr aufgebracht, drückt die Feder 60 die Verlagerungseinheit 30 wieder von dem Gleitelement 47 weg und die Rastelemente 46 sind zwischen benachbarten Rastelementen 20 aufgenommen, wodurch eine Verlagerung in der ersten Richtung R nicht mehr möglich ist.

Fig. 5 zeigt eine schematische Seitenansicht der Verlagerungseinheit 30 ohne Gleitelement 47. Die Anordnung und Ausbildung der Rastelemente 40 erlaubt ein Verschwenken des Gelenkelements 50 um 90°. D.h. Der Fachteiler 26 bzw. das Gelenkelement 50 mit einem daran angeordneten Trennelement 70 können aus einer in Fig. 1 gezeigten Stellung um die erste Achse A₁ nach unten verschwenkt werden, bis das Trennelement 70 im Wesentlichen parallel zur Seitenwand 14 ausgerichtet ist.

In weiteren nicht dargestellten Ausführungen kann die Ausbildung und Anordnung von Rastelementen 40 auch anders erfolgen, so dass ein Verschwenken größer oder kleiner 90° durchgeführt werden kann.

Fig. 6 zeigt eine perspektivische Darstellung des Gelenkelements 50 des Fachteilers 26. Das Gelenkelement 50 weist eine umlaufende Nut 58 auf. In der Nut 58 sind Führungselemente 78 des Trennelements 70 aufgenommen. Das Trennelement 70 kann um das Gelenkelement 50 verschwenkt werden und ist über die Führungselemente 78 sicher gehalten.

Das Gelenkelement 50 weist eine Öffnung 52 auf, in welcher der Taster 80 verschiebbar aufgenommen ist. Der Taster 80 weist einen Tastkopf 82 mit einem größeren Durchmesser auf als der Rest des Tasters 80. Entsprechend weist der obere Bereich der Öffnung 52 einen größeren Durchmesser auf als die unteren Abschnitte.

Das Gelenkelement 50 weist zwei Lageraufnahmen 56 für die Lager 36 der Verlagerungseinheit 30 auf. Die Lager 36 sind verdrehbar in den Lageraufnahmen 56 aufgenommen. Ein Verschwenken des Gelenkelements 50 um die erste Achse A₁ ist aber erst dann möglich, wenn erste Rastelemente 86 des Tasters 80 aus einer Stellung zwischen den Rastelementen 40 verbracht wurden.

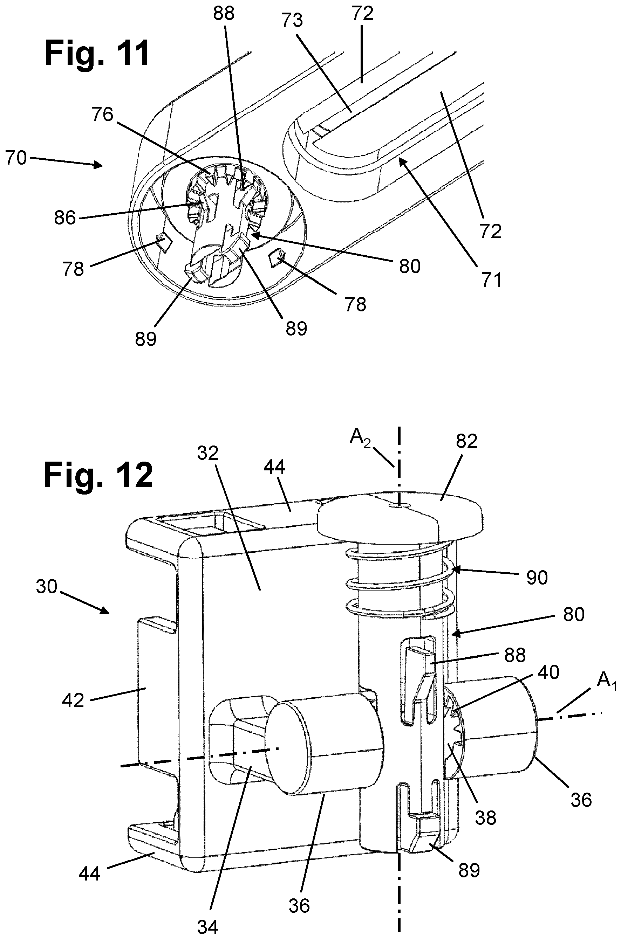

Fig. 7 zeigt eine schematische Schnittansicht des Gelenkelements 50. Die Öffnung 52 weist in einem oberen Bereich einen größeren Durchmesser auf. Von dem oberen Bereich aus weist die Öffnung 52 einen Abschnitt mit einem erweiterten Durchmesser auf, der sich bis zu einem Abschnitt mit einer ringförmigen Auflagefläche 54 erstreckt. Auf der ringförmigen Auflagefläche 54 liegt ein Ende einer Feder 90 (siehe Fig.12) auf. Die Feder 90 drückt den Tastkopf 82 des Tasters 80 nach oben, wobei die Verlagerung des Tasters 80 über Haken 89 begrenzt wird, die in einer verriegelten Stellung, in welcher der Taster 80 sich in seiner am weitesten nach oben verlagerten Position befindet, in Aufnahmen in dem unteren Bereich der Öffnung 52 an Anlageflächen anliegen. Die Aufnahmen erweitern den Durchmesser im unteren Bereich. Die Aufnahmen erstrecken sich jedoch nicht vollumfänglich um die Öffnung 52 sondern erstrecken sich nur abschnittsweise im Wesentlichen über die Breite der Haken 89.

Die Durchmesser im oberen Bereich und im unteren Bereich sind über die Doppelpfeile gezeigt.

Fig. 8 zeigt eine perspektivische Darstellung des Tasters 80 des Fachteilers 26. Der Taster 80 weist einen Tastkopf 82 und eine mit dem Tastkopf 82 verbundene Welle 84 auf. An der Welle 84 sind zwei erste Rastelemente 86 und zwei zweite Rastelemente 88 angeordnet. Die ersten Rastelemente 86 und die zweiten Rastelemente 88 sind gegenüberliegend an der Welle 84 angeordnet. Die ersten Rastelemente 86 und die zweiten Rastelemente 88 sind um 90° versetzt zueinander und entlang der Längsachse der Welle 84 des Tasters 80 beabstandet zueinander angeordnet.

Die Arretierung des Fachteilers 26 in der ersten Richtung R erfolgt über die Verlagerungseinheit 30 und die Führung 16. Die Arretierung des Fachteilers 26 im Hinblick auf ein Verschwenken des Trennelements 70 um die erste Achse A₁ und die zweite Achse A₂ erfolgt über die Verlagerungseinheit 30, das Gelenkelement 50, das Trennelement 70 und den Taster 80.

Der Taster 80 ist in der Öffnung 52 des Gelenkelements 50 aufgenommen, wobei die Haken 89 in einer arretierten Stellung an den Anlageflächen in den Aufnahmen im unteren Bereich der Öffnung 52 anliegen. Die ersten Rastelemente 86 befinden sich im Wesentlichen auf Höhe der Öffnungen in dem Gelenkelement 50, welche die Lageraufnahmen 56 bilden. In einer arretierten Stellung befinden sich die ersten Rastelemente 86 in einer oberen Stellung im Bereich der Lageraufnahmen 56.

Im zusammengebauten Zustand der Ablageeinrichtung 10 sind in den Lageraufnahmen 56 die Lager 36 um die erste Achse A₁ drehbar gelagert. In den Lageröffnungen 38 sind die Rastelemente 40 angeordnet, so dass in einer arretierten Stellung die ersten Rastelemente 86 zwischen benachbarten Rastelementen 40 aufgenommen sind und damit ein Verschwenken des Gelenkelements 50 um die erste Achse A₁ verhindert wird. Wird der Taster 80 über den Tastkopf 82 und gegen die Kraft der Feder 90 nach unten gedrückt, werden die ersten Rastelemente 86 nach unten bewegt und befinden sich dann nicht mehr zwischen benachbarten Rastelementen 40. Das Gelenkelement 50 kann dann um die erste Achse A₁ verschwenkt werden.

Fig. 9 zeigt eine schematische Ansicht auf das Trennelement 70 des Fachteilers 26 von unten. Das Trennelement 70 weist eine Öffnung 74 auf. Die Öffnung 74 ist von einer weiteren Öffnung umgeben, welche sich nicht vollständig durch das Trennelement 70 hindurch erstreckt. In dieser Öffnung sind die Öffnung 74 umgebende Rastelemente 76 angeordnet. In der die Öffnung 74 umgebenden Öffnung sind an deren Innenwand die Führungselemente 78 angeordnet. Die Führungselemente 78 sind im zusammengebauten Zustand der Ablageeinrichtung 10 in der Nut 58 des Gelenkelements 50 aufgenommen. Das Trennelement 70 ist daher um die zweite Achse A₂ drehbar gelagert.

Die zweite Achse A₂ verläuft im Wesentlichen mittig durch die Welle 82 des Tasters 80 und die Öffnung 74. Im zusammengebauten Zustand der Ablageeinrichtung 10 ist ein oberer Abschnitt der Welle 84 des Tasters 80 in der Öffnung 74 aufgenommen.

Das Trennelement 70 weist einen abstehenden Abschnitt auf, der eine längliche Aufnahmeöffnung 71 aufweist. In der Aufnahmeöffnung 71 sind flexible Elemente 72 angeordnet. Die flexiblen Elemente 72 sind so angeordnet, dass zwischen ihnen ein Schlitz 73 besteht. In diesen Schlitz 73 kann bspw. ein Smartphone eingeschoben werden. Hierzu sind die Weite und die Länge der Aufnahmeöffnung 71 entsprechend groß gewählt. Weiterhin hängt die Ausbildung des Trennelements 70 auch von der Ausbildung und Größe sowie Tiefe des Aufnahmefachs 12 ab und ist daher entsprechend auszubilden.

Die flexiblen Elemente 72 können bspw. gummiartige, federnde Elemente sein, die ein in dem Schlitz 73 aufgenommenes Smartphone vor Beschädigungen, wie z.B. vor Kratzern durch die Kunststoffoberfläche des Trennelements 70, schützen.

Fig. 10 zeigt eine schematische Schnittansicht des Trennelements 70 des Fachteilers 26. Die Rastelemente 76 und die Führungselemente 78 sind in der die Öffnung 74 umgebenden Öffnung an der Unterseite des Trennelements 70 angeordnet. Oberhalb der Öffnung 74 weist das Trennelement 70 eine weitere Öffnung auf, die sich ebenfalls nicht vollständig durch das Trennelement 70 hindurch erstreckt. Diese Öffnung weist eine die Öffnung 74 beabstandet umgebende Ringwand auf. Auf einer ringförmigen Auflagefläche zwischen der Ringwand und der Öffnung 74 stützt sich im zusammengebauten Zustand der Ablageeinrichtung 10 ein Ende der Feder 90 ab. Das andere Ende der Feder 90 stützt sich an der Unterseite des Tastkopfes 82 ab. Die Feder 90 drückt somit den Taster 80 stets in die Verriegelungsstellung, wobei die ersten Rastelemente 86 zwischen Rastelementen 40 aufgenommen sind und damit ein Verschwenken um die erste Achse A₁ verhindern und die zweiten Rastelemente 88 zwischen benachbarten Rastelementen 76 aufgenommen sind und damit ein Verschwenken des Trennelements 70 um die zweite Achse A₂ verhindern.

Um ein Verschwenken um die erste Achse A₁ und die zweite Achse A₂ durchführen zu können, muss der Taster 80 nach unten gedrückt werden. Die ersten Rastelemente 86 und die zweiten Rastelemente 88 werden dabei ebenso nach unten verlagert und sind dann nicht mehr zwischen benachbarten Rastelementen 40 und benachbarten Rastelementen 76 aufgenommen. Wird kein Druck mehr auf den Taster 80 gegen die Kraft der Feder 90 aufgebracht, drückt die Feder 90 den Taster 80 zurück in seine Ausgangsstellung, in welcher die ersten Rastelemente 86 zwischen benachbarten Rastelementen 40 und die zweiten Rastelemente 88 zwischen benachbarten Rastelementen 76 aufgenommen sind. Das Trennelement 70 kann dann nicht um die zweite Achse A₂ und das Gelenkelement 50 nicht mehr um die erste Achse A₁ verschwenkt werden.

Fig. 11 zeigt eine perspektivische Darstellung des Trennelements 70 und des eingesetzten Tasters 80 von unten. Fig. 11 zeigt einen verriegelten bzw. arretierten Zustand, in dem die zweiten Rastelemente 88 zwischen benachbarten Rastelementen 76 an der Unterseite des Trennelements 70 aufgenommen sind.

Fig. 12 zeigt eine perspektivische Darstellung der Verlagerungseinheit 30 und des Tasters 80 mit der Feder 90. Fig. 12 zeigt einen verriegelten bzw. arretierten Zustand, in dem die ersten Rastelemente 86 zwischen benachbarten Rastelementen 40 in den Lageröffnungen 38 der Lager 36 aufgenommen sind.

Die Fig. 11 und 12 verdeutlichen die einfache und zuverlässige Arretierung des Fachteilers 26 im Hinblick auf ein Verschwenken um die erste Achse A₁ und die zweite Achse A₂ über den verlagerbaren Taster 80. Solange der Taster 80 gedrückt wird, können das Trennelement 70 relativ zu dem Gelenkelement 50 und das Gelenkelement 50 relativ zu der Verlagerungseinheit 30 verschwenkt werden.

Fig. 13 zeigt eine schematische Schnittansicht der Führung 16, der Verlagerungseinheit 30, des Gelenkelements 50, des Tasters 80 und des Trennelements 70. Fig. 13 zeigt einen Schnitt, der nicht mittig durch das Trennelement 70 verläuft. Demgemäß sind nicht alle für eine Arretierung erforderlichen Komponenten dargestellt.

Wird auf die Verlagerungseinheit 30 von rechts ein Druck aufgebracht, wird die Feder 60 komprimiert und die Rastelemente 46 werden aus der Verriegelungsstellung zwischen den Rastelementen 20 herausbewegt. Solange der Druck aufrechterhalten wird, können die Verlagerungseinheit 30 und somit der Fachteiler 26 in der ersten Richtung R entlang der ersten Achse A₁ verlagert werden.

Um das Gelenkelement 50 um die erste Achse A₁ relativ zu der Verlagerungseinheit 30 und um das Trennelement 70 um die zweite Achse A₂ relativ zu dem Gelenkelement 50 zu verschwenken, muss der Taster 80 gegen die Kraft der Feder 90 nach unten gedrückt werden. Hierbei kann ein Verschwenken um die erste Achse A₁ und um die zweite Achse A₂ auch nur dann erfolgen, solange der Taster 80 nach unten gedrückt ist.

Fig. 14 zeigt eine perspektivische, teilweise geschnittene Ansicht der Führung 16, der Verlagerungseinheit 30, des Gelenkelements 50, des Tasters 80 und des Trennelements 70 zur Veranschaulichung der Ausbildung der Ablageeinrichtung 10 gemäß einer beispielhaften Ausführungsform.

Bei der hierin beschriebenen Ausführungsform erfolgt das Freigeben der Verlagerung des Fachteilers 26 über zwei getrennte Arretierungsabschnitte, wobei in einem ersten Arretierungsabschnitt die Verlagerung in der ersten Richtung R und in einem zweiten Arretierungsschritt das Verschwenken um die erste Achse A₁ und die zweite Achse A₂ bewerkstelligt werden. Die Ablageeinrichtung 10 ermöglicht die sichere Aufbewahrung verschiedener Gegenstände, wie z.B. Getränkebehälter, elektronische Geräte, Schreibutensilien, Lebensmittel, Wertgegenstände, etc.

### Bezugszeichenliste

- 10: Ablageeinrichtung
- 12: Aufnahmefach
- 14: Seitenwand
- 16: Führung
- 18: Leiste
- 20: Rastelement
- 22: Führungsabschnitt
- 26: Fachteiler
- 30: Verlagerungseinheit
- 32: Wand
- 34: Arm
- 36: Lager
- 38: Lageröffnung
- 40: Rastelement
- 42: Seitenwand
- 44: Wand
- 46: Rastelement
- 47: Gleitelement
- 48: Stift
- 49: Öffnung
- 50: Gelenkelement
- 52: Öffnung
- 54: Auflagefläche
- 56: Lageraufnahme
- 58: Nut
- 60: Feder
- 70: Trennelement
- 71: Aufnahmeöffnung
- 72: Element
- 73: Schlitz
- 74: Öffnung
- 76: Rastelement
- 78: Führungselement
- 80: Taster
- 82: Tastkopf
- 84: Welle
- 86: Rastelement
- 88: Rastelement
- 89: Haken
- 90: Feder

- A₁: Achse
- A₂: Achse
- R: Richtung

## Patentansprüche

1. Ablageeinrichtung mit einem Aufnahmefach (12) für Gegenstände und mit Mitteln zum Unterteilen des Aufnahmefachs (12) in Teilfächer, aufweisend mindestens einen Fachteiler (26), wobei
- der Fachteiler (26) entlang einer ersten Richtung (R) verlagerbar am Aufnahmefach (12) angeordnet ist,
- der Fachteiler (26) um eine in der ersten Richtung (R) verlaufende erste Achse (A₁) verschwenkbar ist, und
- der Fachteiler (26) um eine orthogonal zur ersten Achse (A₁) verlaufende zweite Achse (A₂) verschwenkbar ist.

2. Ablageeinrichtung nach Anspruch 1, wobei der Fachteiler (26) eine Arretierungseinrichtung aufweist, über welche die Position des Fachteilers (26) in der ersten Richtung (R) und die Auslenkung des Fachteilers (26) um die erste Achse (A₁) und um die zweite Achse (A₂) arretierbar sind.

3. Ablageeinrichtung nach Anspruch 2, wobei die Arretierungseinrichtung eine Verlagerungseinheit (30) aufweist, die entlang einer Führung (16) verschiebbar gelagert ist und eine Feder (60) aufweist, welche die Verlagerungseinheit (30) in eine Raststellung drückt.

4. Ablageeinrichtung nach Anspruch 3, wobei die Führung (16) Rastelemente (20) und die Verlagerungseinheit (30) korrespondierende Rastelemente (46) aufweisen.

5. Ablageeinrichtung nach Anspruch 3 oder 4, wobei an der Verlagerungseinheit (30) ein Gelenkelement (50) angeordnet ist und das Gelenkelement (50) eine in Richtung der zweiten Achse (A₂) verlaufende Öffnung (52) aufweist, in der ein Taster (80) verlagerbar aufgenommen ist.

6. Ablageeinrichtung nach Anspruch 5, wobei das Gelenkelement (50) um die erste Achse (A₁) verschwenkbar an der Verlagerungseinheit (30) angeordnet ist.

7. Ablageeinrichtung nach Anspruch 5 oder 6, wobei der Taster (80) über eine Feder (90) vorgespannt ist.

8. Ablageeinrichtung nach einem der Ansprüche 5 bis 7, wobei der Taster (80) mindestens ein erstes Rastelement (86) und ein zweites Rastelement (88) aufweist, die entlang der Längsachse des Tasters (80) beabstandet zueinander angeordnet sind.

9. Ablageeinrichtung nach einem der Ansprüche 5 bis 8, wobei an dem Gelenkelement (50) ein um die zweite Achse (A₂) drehbares Trennelement (70) angeordnet ist und das Trennelement (70) eine Öffnung (74) aufweist, in welcher ein Abschnitt des Tasters (80) aufgenommen ist.

10. Ablageeinrichtung nach Anspruch 9, wobei das Trennelement (70) um die Öffnung (74) herum angeordnete Rastelemente (76) aufweist und in einer arretierten Stellung des Trennelements (70) das mindestens eine zweite Rastelement (88) zwischen zwei benachbarten Rastelementen (76) des Trennelements (70) aufgenommen ist.

11. Ablageeinrichtung nach Anspruch 9 oder 10, wobei die Verlagerungseinheit (30) mindestens eine Lageröffnung (38) mit innenliegenden Rastelementen (40) aufweist und in einer arretierten Stellung des Gelenkelements (50) das mindestens eine erste Rastelement (86) des Tasters (80) zwischen zwei benachbarten Rastelementen (40) in der Lageröffnung (38) der Verlagerungseinheit (30) aufgenommen ist.

## Claims

1. Storage device with a receiving compartment (12) for objects and with means for dividing the receiving compartment (12) into sub-compartments, comprising at least one compartment divider (26), wherein
- the compartment divider (26) is arranged at the receiving compartment (12) to be displaceable along a first direction (R),
- the compartment divider (26) is pivotable about a first axis (A₁) extending in the first direction (R) and
- the compartment divider (26) is pivotable about an second axis (A₂) extending orthogonally to the first axis (A₁).

2. Storage device according to claim 1, wherein the compartment divider (26) comprises a locking device by way of which the position of the compartment divider (26) in the first direction (R) and the deflection of the compartment divider (26) about the first axis (A₁) and about the second axis (A₂) are lockable.

3. Storage device according to claim 2, wherein the locking device comprises a displacing unit (30) which is mounted to be displaceable along a guide (16) and which comprises a spring (60) urging the displacing unit (30) into a detent setting.

4. Storage device according to claim 3, wherein the guide (16) comprises detent elements (20) and the displacing unit (30) comprises co-operating detent elements (46).

5. Storage device according to claim 3 or 4, wherein a joint element (50) is arranged at the displacing unit (30) and the joint element (50) has an opening (52) which extends in the direction of the second axis (A₂) and in which a button (80) is received to be displaceable.

6. Storage device according to claim 5, wherein the joint element (50) is arranged at the displacing unit (30) to be pivotable about the first axis (A₁).

7. Storage device according to claim 5 or 6, wherein the button (80) is biased by way of a spring (90).

8. Storage device according to any one of claims 5 to 7, wherein the button (80) has at least one first detent element (86) and second detent element (88) arranged at a mutual spacing along the longitudinal axis of the button (80).

9. Storage device according to any one of claims 5 to 8, wherein a separating element (70) rotatable about the second axis (A₂) is arranged at the joint element (50) and the separating element (70) has an opening (74) in which a section of the button (80) is received.

10. Storage device according to claim 9, wherein the separating element (70) comprises detent elements (76) arranged around the opening (74) and in a locked setting of the separating element (70) the at least one second detent element (88) is received between two adjacent detent elements (76) of the separating element (70).

11. Storage device according to claim 9 or 10, wherein the displacing unit (30) has at least one bearing opening (38) with internally disposed detent elements (40) and in a locked setting of the joint element (50) the at least one first detent element (86) of the button (80) is received between two adjacent detent elements (40) in the bearing opening (38) of the displacing unit (30).

## Revendications

1. Dispositif de support avec un compartiment de logement (12) pour des objets et avec des moyens servant à diviser le compartiment de logement (12) en des compartiments partiels, présentant au moins un séparateur de compartiment (26), dans lequel
- le séparateur de compartiment (26) est disposé au niveau du compartiment de logement (12) de manière à pouvoir être déplacé le long d'une première direction (R),
- le séparateur de compartiment (26) peut être pivoté autour d'un premier axe (A₁) s'étendant dans la première direction (R), et
- le séparateur de compartiment (26) peut être pivoté autour d'un deuxième axe (A₂) s'étendant de manière orthogonale par rapport au premier axe (A₁).

2. Dispositif de support selon la revendication 1, dans lequel le séparateur de compartiment (26) présente un dispositif d'arrêt, par l'intermédiaire duquel la position du séparateur de compartiment (26) peut être arrêtée dans la première direction (R) et la déviation du séparateur de compartiment (26) autour du premier axe (A₁) et autour du deuxième axe (A₂) peut être arrêtée.

3. Dispositif de support selon la revendication 2, dans lequel le dispositif d'arrêt présente une unité de déplacement (30), qui est montée de manière à pouvoir être coulissée le long d'un guidage (16) et présente un ressort (60), qui pousse l'unité de déplacement (30) dans une position d'enclenchement.

4. Dispositif de support selon la revendication 3, dans lequel le guidage (16) présente des éléments d'enclenchement (20) et l'unité de déplacement (30) présente des éléments d'enclenchement (46) correspondants.

5. Dispositif de support selon la revendication 3 ou 4, dans lequel un élément d'articulation (50) est disposé au niveau de l'unité de déplacement (30) et l'élément d'articulation (50) présente une ouverture (52) s'étendant en direction du deuxième axe (A₂), dans laquelle une sonde (80) est logée de manière à pouvoir être déplacée.

6. Dispositif de support selon la revendication 5, dans lequel l'élément d'articulation (50) est disposé au niveau de l'unité de déplacement (30) de manière à pouvoir pivoter autour du premier axe (A₁).

7. Dispositif de support selon la revendication 5 ou 6, dans lequel la sonde (80) est précontrainte par l'intermédiaire d'un ressort (90).

8. Dispositif de support selon l'une quelconque des revendications 5 à 7, dans lequel la sonde (80) présente au moins un premier élément d'enclenchement (86) et un deuxième élément d'enclenchement (88), qui sont disposés de manière espacée l'un par rapport à l'autre le long de l'axe longitudinal de la sonde (80).

9. Dispositif de support selon l'une quelconque des revendications 5 à 8, dans lequel un élément de séparation (70) pouvant tourner autour du deuxième axe (A₂) est disposé au niveau de l'élément d'articulation (50), et l'élément de séparation (70) présente une ouverture (74), dans laquelle une section de la sonde (80) est logée.

10. Dispositif de support selon la revendication 9, dans lequel l'élément de séparation (70) présente des éléments d'enclenchement (76) disposés tout autour de l'ouverture (74) et, dans une position arrêtée de l'élément de séparation (70), l'au moins un deuxième élément d'enclenchement (88) est logé entre deux éléments d'enclenchement (76) adjacents de l'élément de séparation (70).

11. Dispositif de support selon la revendication 9 ou 10, dans lequel l'unité de déplacement (30) présente au moins une ouverture de montage (38) avec des éléments d'enclenchement (40) situés à l'intérieur, et, dans une position arrêtée de l'élément d'articulation (50), l'au moins un premier élément d'enclenchement (86) de la sonde (80) est logé entre deux éléments d'enclenchement (40) adjacents dans l'ouverture de montage (38) de l'unité de déplacement (30).
